# FASCICULE DE BREVET EUROPEEN

(11) **EP 3 339 400 B1**
(45) Date de publication et mention de la délivrance du brevet: **15.05.2019**
(21) Numéro de dépôt: 17306820.6
(22) Date de dépôt: 19.12.2017
(51) Int. Cl.: C10G 49/22, C10G 47/00, B01D 3/06, B01D 3/34, B01D 3/38, B01D 3/14, C10G 47/24, C10G 55/08, C10G 7/06

(54) **PROCEDE ET DISPOSITIF D'HYDROCRAQUAGE AVEC REDUCTION DES COMPOSES POLYNUCLEAIRES AROMATIQUES**
HYDROCRACKING-VERFAHREN UND -VORRICHTUNG MIT REDUZIERUNG DER AROMATISCHEN POLYNUKLEAREN VERBINDUNGEN
METHOD AND DEVICE FOR HYDROCRACKING WITH REDUCTION OF THE AROMATIC POLYNUCLEAR COMPOUNDS

(30) Priorité: 22.12.2016 FR 1663096
(43) Date de publication de la demande: 27.06.2018
(73) Titulaire: AXENS, 92508 Rueil-Malmaison Cedex (FR)
(72) Inventeur: PUPAT, Nicolas, 78800 HOUILLES (FR)
(74) Mandataire: IFP Energies nouvelles

(56) Documents cités:
- FR-A1- 3 030 566
- US-A- 5 120 427
- US-A1- 2012 145 594

## Description

### DOMAINE TECHNIQUE

La présente invention a pour objet un procédé et un dispositif permettant de réduire la concentration en composés aromatiques polycycliques lourds (HPNA) dans la boucle de recyclage des unités d'hydrocraquage.

### ART ANTERIEUR

Les procédés d'hydrocraquage sont couramment utilisés en raffinerie pour transformer des mélanges hydrocarbonés en produits aisément valorisables. Ces procédés peuvent être utilisés pour transformer des coupes légères telles que par exemple des essences en coupes plus légères (LPG). Ils sont toutefois habituellement plutôt utilisés pour convertir des charges plus lourdes (telles que des coupes pétrolières ou synthétiques lourdes, par exemple des gasoils issus de distillation sous vide ou des effluents d'une unité Fischer-Tropsch) en essence ou naphta, kérosène, gasoil. Ce type de procédé est également utilisé pour produire des huiles. Afin d'augmenter la conversion des unités d'hydrocraquage, une partie de la charge non convertie est recyclée soit dans la section réactionnelle dans laquelle elle est déjà passée soit dans une section réactionnelle indépendante. Ceci induit dans la boucle de recyclage une accumulation indésirable des composés aromatiques polycycliques (HPNA), formés dans la section réactionnelle durant les réactions de craquage. Ces composés empoisonnent le catalyseur d'hydrocraquage, ce qui réduit l'activité catalytique ainsi que la durée de cycle. Ils peuvent également précipiter ou se déposer dans les parties froides de l'unité, générant ainsi des dysfonctionnements.

Les composés HPNA sont définis comme des composés aromatiques polycycliques ou polynucléaires qui comprennent donc plusieurs noyaux ou cycles benzéniques condensés. On les nomme habituellement HPA, Heavy Polynuclear Aromatics selon la terminologie anglo-saxonne, PNA ou HPNA.

Typiquement, les HPNA dits lourds comprennent au moins 4, voire au moins 6 cycles benzéniques dans chaque molécule. Les composés à moins de 6 cycles (dérivés du pyrène par exemple) peuvent être plus facilement hydrogénés et sont donc moins susceptibles d'empoisonner des catalyseurs. En conséquence nous nous sommes plus particulièrement intéressés aux composés les plus représentatifs des familles à 6 cycles aromatiques ou plus comme par exemple le Coronène (composé à 24 carbones), le dibenzo(e,ghi) pérylène (26 carbones), le naphto[8,2,1,abc] coronène (30 carbones) et l'ovalène (32 carbones), qui sont les composés les plus facilement identifiables et quantifiables par exemple par chromatographie.

Le brevet US 7,588,678 décrit un procédé d'hydrocraquage avec recyclage de la fraction non convertie 380°C+, procédé dans lequel les composés HPNA sont éliminés de la fraction recyclée au moyen d'un adsorbant. D'autres techniques de réduction de la quantité ou d'élimination des HPNA sont décrites dans l'art antérieur de ce brevet, telles que par exemple leur réduction via une hydrogénation ou leur précipitation suivie d'une filtration. La demanderesse a recherché un procédé qui n'utilise pas ces techniques pour séparer les HPNA.

Le brevet US 4,961,839 décrit un procédé d'hydrocraquage permettant d'augmenter la conversion par passe en utilisant des débits d'hydrogène élevés dans la zone réactionnelle, en vaporisant une proportion importante des hydrocarbures envoyés dans la colonne de séparation des produits et en concentrant les composés aromatiques polycycliques dans une petite fraction lourde qui est extraite de cette colonne. Dans ce procédé, une fraction lourde est soutirée au niveau d'un plateau situé au-dessus du point d'alimentation et en-dessous du point de soutirage du distillat diesel ; cette fraction lourde est recyclée vers l'hydrocraquage. Le fond de colonne (résidu) est recyclé directement dans la colonne de fractionnement. Ce type de technique permet certes une diminution de la concentration en HPNA dans la boucle de recyclage vers le réacteur, mais conduit à des pertes de rendements significatives et des coûts importants liés aux quantités d'hydrogène.

Le brevet US 3,377,267 décrit un procédé d'hydrocraquage dans lequel l'effluent hydrocraqué passe dans un ballon séparateur chaud à haute pression , et tout ou partie de la fraction de fond du ballon séparateur chaud à haute pression est strippée à contre-courant dans une colonne de stripage à l'aide de vapeur d'eau. Une partie de la fraction de fond de la colonne de stripage constitue la purge de l'unité, l'autre partie étant recyclée vers le réacteur. Dans cette configuration, le flux qui est recyclé à la section réactionnelle est très riche en HPNA car de même composition que le flux permettant de purger les HPNA de l'unité. D'autre part, dans ladite colonne de stripage ont lieu à la fois l'étape de purge des HPNA et l'étape de séparation des produits non-convertis, recyclés à la section réactionnelle, et des produits valorisables.

Les demandes de brevet et WO 2012/052042 et WO 2012/052116 (correspondant à US-2013/0220885) décrivent un procédé d'hydrocraquage dans lequel une partie de la fraction de fond de la colonne de fractionnement (résidu) est recyclée vers la section réactionnelle. L'autre partie de la fraction de fond de la colonne de fractionnement est strippée à contre-courant dans une colonne de stripage. La fraction gazeuse obtenue après stripage est renvoyée à la colonne de fractionnement et la fraction lourde issue du stripage est au moins en partie purgée, l'autre partie de cette fraction pouvant être recyclée à la colonne de stripage. Les conditions opératoires de la colonne de fractionnement et de la colonne de stripage sont liées car l'effluent gazeux de la colonne de stripage constitue l'une des charges de la colonne de fractionnement, et une partie du fond de la colonne de fractionnement constitue la charge de la colonne de stripage.

Ces procédés permettent de diminuer la quantité de HPNA, au détriment des rendements d'hydrocraquage, des coûts opératoires et/ou de l'opérabilité de l'unité.

Les demandes de brevet FR3030564A, FR3030565A et FR3030566A, de la demanderesse décrivent un procédé d'hydrocraquage dans lequel une fraction lourde est soutirée latéralement de la colonne de fractionnement principal et est éventuellement strippée à contre-courant dans une colonne de stripage. Cette fraction lourde, ou la fraction lourde résultant du stripage , qui est moins concentrée en HPNA est ensuite mélangée à une partie de la fraction recueillie en fond de colonne de fractionnement, plus concentrée en HPNA avant d'être recyclée vers la section réactionnelle. L'autre partie de la fraction recueillie en fond de colonne de fractionnement constituant la purge de l'unité.

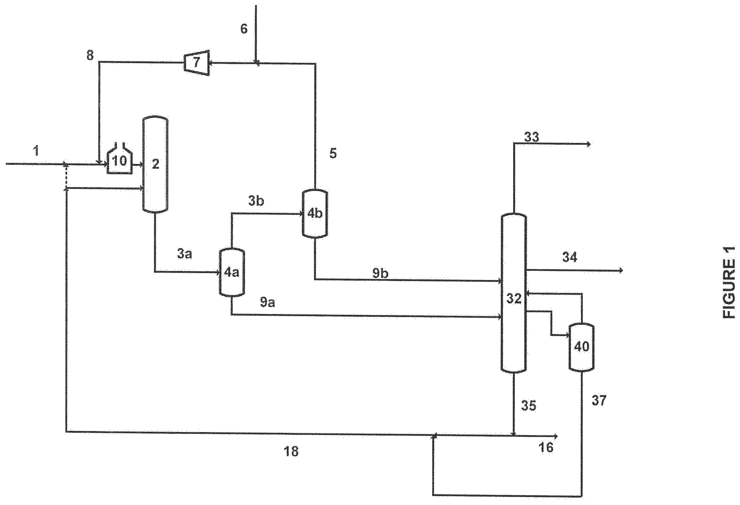

La figure 1 décrit un dispositif d'hydrocraquage de l'art antérieur dans lequel l'effluent issu de la section réactionnelle (2) d'hydrocraquage est envoyé successivement dans les ballons séparateurs (4a) et (4b), puis directement dans la section de fractionnement (32). Le traitement des HPNA est réalisé dans un stripeur (40) positionné latéralement et en aval par rapport à la section de fractionnement (32).

En particulier, le dispositif de la figure 1 comprend :
- Une conduite (1) d'introduction de la charge dans un four (10), d'une conduite (8) d'introduction d'hydrogène dans la charge, ledit four est muni d'une conduite de sortie de la charge chauffée vers une section réactionnelle (2) d'hydrocraquage, ladite section étant munie d'une conduite (3a) pour le soutirage de l'effluent hydrocraqué,
- Un séparateur chaud à haute pression (4a), muni d'une conduite (3a) d'introduction de l'effluent hydrocraqué , et muni en tête du séparateur d'une conduite (3b) d'évacuation d'un effluent gazeux et ledit séparateur étant muni d'une conduite (9a) de soutirage d'un effluent lourd,
- Un séparateur froid à haute pression (4b), muni d'une conduite (3b) d'introduction de l'effluent gazeux issu du séparateur chaud à haute pression (4a), d'une conduite (5) d'évacuation d'un effluent gazeux et ledit séparateur étant muni d'une conduite (9b) de soutirage d'un effluent lourd,
- une zone (7) de compression d'une partie au moins de l'effluent gazeux issu séparateur froid à haute pression (4b), , une conduite (6) d'introduction d'hydrogène dans la conduite (5), une conduite (8) d'introduction du flux gazeux compressé dans la charge,
- une section de fractionnement comportant une colonne de fractionnement (32), munie d'une conduite (9a) d'introduction de l'effluent lourd issu du séparateur chaud à haute pression (4a), d'une conduite (9b) d'introduction de l'effluent lourd issu du séparateur froid à haute pression ((4b), d'une conduite (33) d'évacuation des gaz, d'une conduite (34) pour l'évacuation de la fraction naphta, d'une conduite (36) pour l'évacuation de la fraction gazole et d'une conduite (35) en fond de colonne pour le soutirage d'un résidu, ladite conduite (35) permettant le recyclage de tout ou partie dudit résidu par la conduite (18) vers la section réactionnelle (2) et permettant la purge par la conduite (16).
- Un stripeur (40) latéral à la section de fractionnement (32) muni d'une conduite d'introduction d'une partie de l'effluent fractionné dans ladite section (32), d'une conduite de recyclage de l'effluent gazeux vers ladite section (32), et d'une conduite d'évacuation (37) de l'effluent lourd vers la conduite (18) de recyclage.

Dans le domaine de l'invention, l'homme du métier cherche donc constamment à limiter l'accumulation des HPNA dans la boucle de recyclage, par exemple par le biais d'une purge riche en HPNA, pour prévenir la désactivation prématurée des catalyseurs mis en oeuvre, tout en séparant les produits finis valorisables et les produits non convertis. On entend par purge l'évacuation d'un flux en dehors du procédé mis en oeuvre. Les produits non convertis sont recyclés vers la section réactionnelle de l'unité afin de maximiser les rendements. US 2012/0145594 divulgue un procédé et un dispositif d'hydrocraquage.

De manière surprenante, la demanderesse a découvert qu'il était possible de découpler l'étape de purge des HPNA et l'étape de séparation des produits non-convertis et des produits valorisables et ainsi de traiter ces deux étapes séparément, permettant avantageusement d'adapter les conditions opératoires, et donc les performances, de chacune des étapes. Il en résulte une réduction nettement améliorée de la quantité de HPNA.

Avantageusement le procédé selon l'invention permet d'augmenter la durée de cycle et de vie du catalyseur mis en oeuvre dans l'étape a) d'hydrocraquage.

Le procédé selon l'invention propose d'ajouter une colonne de séparation, de type stripeur ou colonne rebouillie, en amont de la section de fractionnement, afin de traiter au moins une partie de l'effluent lourd issu du séparateur chaud à haute pression. Tout ou partie de la fraction de fond de ladite colonne, qui est riche en HPNA, est purgée. Au moins une partie de la fraction de fond issue de la section de fractionnement, qui est constituée des produits non-convertis, est recyclée vers la section réactionnelle. Le procédé selon l'invention ne comporte pas de stripeur placé en aval de la colonne de fractionnement tel que le procédé dans l'art antérieur.

### RESUME DE L'INVENTION

Il est précisé que, dans toute la description, l'expression « compris(e) entre ... et ... » doit s'entendre comme incluant les bornes citées.

Dans le sens de la présente invention, les différents modes de réalisation présentés peuvent être utilisés seul ou en combinaison les uns avec les autres.

Afin de faciliter la compréhension de l'invention, la numérotation des équipements mis en oeuvre, illustrée par les figures est indiquée dans la description, sans en limiter la portée. La numérotation des flux dans la description du procédé selon l'invention correspond à la numérotation des conduites dans le dispositif.

Un objet de la présente invention est de fournir un procédé d'hydrocraquage tel que défini dans la revendication 1.

Dans un mode réalisation particulier, la charge est traitée préalablement à l'étape a) par hydroraffinage

Dans un mode de réalisation particulier, le procédé comprend une étape b') de séparation mise en oeuvre dans la zone de séparation chaude dans laquelle l'effluent lourd issu de l'étape b) de séparation est traité dans un séparateur chaud à moyenne pression à une pression inférieure à 4,5MPa et à une température comprise entre 200 et 450°C et il est obtenu un effluent gazeux et un effluent lourd, ledit effluent lourd est envoyé à l'étape d).

Dans un autre mode réalisation particulier, l'étape c) de séparation est réalisée dans un séparateur choisi parmi un ballon de flash, un stripeur, ou une simple colonne à distiller, et à une pression inférieure à la pression de l'étape b) de 0,1 MPa à 1,0 MPa.

Dans un autre mode réalisation particulier, le procédé comprend une étape c') de séparation mise en oeuvre dans la zone de séparation froide de l'effluent lourd issu de l'étape c) et/ou de l'effluent gazeux obtenu à l'issue de l'étape b'), à une pression inférieure à 4,5 MPa et à une température comprise entre 0 et 200°C, et il est obtenu un effluent gazeux et un effluent lourd qui est envoyé à l'étape e).

Dans un autre mode réalisation particulier, l'étape d) de séparation est mise en oeuvre par stripage au moyen d'un gaz choisi parmi l'hydrogène et la vapeur d'eau à une pression comprise entre 0,1MPa et 2,0 MPa.

Dans un autre mode réalisation particulier, le procédé comprend une étape d') de séparation d'au moins un effluent issu de l'étape d) de séparation ou issu de l'étape c'), mise en oeuvre par stripage au moyen d'un gaz choisi parmi l'hydrogène et la vapeur d'eau, à pression comprise entre 0,2 MPa et 2,5MPa.

Dans un autre mode réalisation particulier, la section de fractionnement mise en oeuvre à l'étape e) comporte une ou plusieurs colonnes de distillation dans lesquels la pression est comprise entre 0,01 MPa et 0,5 MPa.

Dans un autre mode réalisation particulier, tout ou partie de l'effluent lourd issu de de l'étape b) ou de l'étape b') est envoyée vers la colonne de séparation mise en oeuvre à l'étape d), de préférence entre 0,1 et 100 % poids par rapport au flux total issu de l'étape b) ou b') (9a), de préférence entre 0,1 et 50 % poids, de préférence entre 0,1 et 10% poids.

Dans un autre mode réalisation particulier, les effluents entrant dans la section de fractionnement (32) sont chauffés à une température comprise entre 200 et 450°C.

Ces modes de réalisation peuvent être combinés.

Un autre objet de l'invention porte sur le dispositif tel que défini dans la revendication 11.

Une variante du dispositif comprend, en outre, dans la première zone chaude de séparation, un séparateur chaud moyenne pression (4c), muni d'une conduite (9a1) d'introduction de l'effluent lourd issu du séparateur chaud haute pression (4a), muni d'une conduite (9a) de soutirage d'un effluent lourd et d'une conduite (11a) de l'effluent gazeux.

Une autre variante du dispositif comprend, en outre, dans la seconde zone froide de séparation, un séparateur froid moyenne pression (4d), muni d'une conduite (9b1) d'introduction de l'effluent lourd issu du séparateur froid haute pression (4b), muni d'une conduite (9b) de soutirage d'un effluent lourd et d'une conduite (11b) de l'effluent gazeux.

Une autre variante du dispositif comprend, en outre, dans la section de fractionnement, une colonne de séparation (12) munie d'au moins une conduite (9b) d'introduction de l'effluent lourd issu d'un séparateur de zone froide de séparation, munie d'une conduite de (19) d'évacuation de l'effluent gazeux et d'une conduite (14) de soutirage de l'effluent lourd.

Ces variantes du dispositif peuvent être combinées.

### Les figures

La figure 1 selon l'art antérieur et les figures 2, 3, 4 et 5 selon l'invention, présentent la même numérotation pour un même équipement du dispositif.
La figure 2 décrit un schéma de procédé selon l'invention dans lequel la colonne de séparation (20) est alimentée par tout ou partie de la fraction de fond du ballon séparateur chaud à haute pression (4a) (flux 9a3). La purge de l'unité (flux 16) concentrée en HPNA constitue tout ou partie du résidu de la colonne de séparation (20). La fraction gazeuse de tête de la colonne de séparation 20 (flux 22) et le fond du ballon séparateur froid à haute pression (4b) (flux 9b) constituent également des alimentations de la section de fractionnement (32).
La figure 3 décrit le schéma de procédé de la figure (2) avec en outre dans les zones de séparation froide et chaude, un séparateur froid à moyenne pression (4d) et un séparateur chaud à moyenne pression (4c) respectivement.
La figure 4 décrit le schéma de procédé de la figure (2) avec en outre dans la section de fractionnement, une colonne de séparation (12).
La figure 5 présente une combinaison du schéma du procédé de la figure 2 avec les séparateurs à froid (4d) et à chaud (4c) et la colonne de séparation (12).

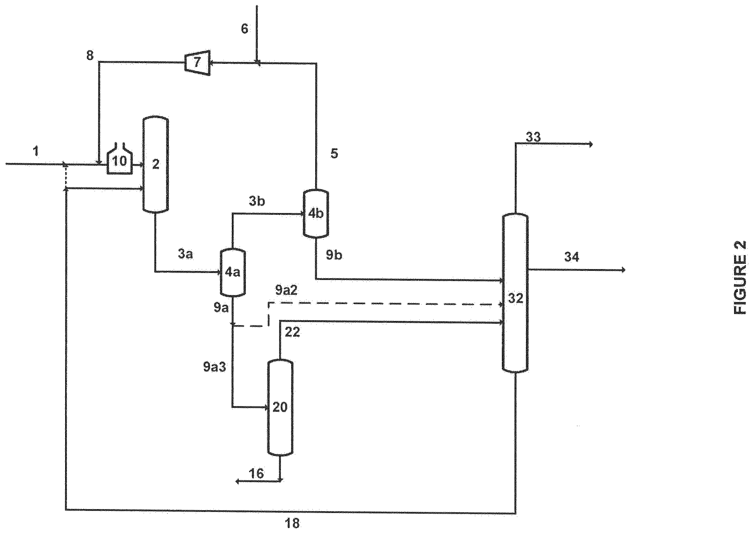

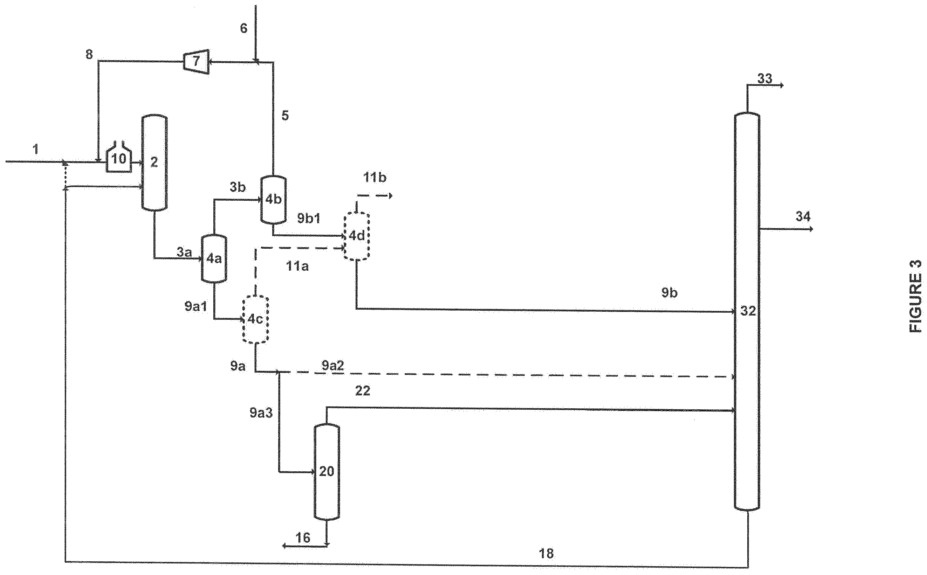

L'objet de l'invention, illustré par les figures 2, 3, 4, et 5 diffère de l'art antérieur illustré par la figure 1 en ce que :
- la fraction lourde de l'effluent du réacteur qui est la plus riche en composés aromatiques polynucléaires (HPNA) issus des réactions, fait l'objet dans le procédé selon l'invention (figure 2, 3, 4 et 5) du prélèvement d'une purge en amont de la section de fractionnement (32), dans la colonne de séparation (20). Avantageusement, les conditions opératoires de la colonne de séparation (20) sont indépendantes de celles de la section de fractionnement (32).
- la séparation des produits valorisables et des produits non-convertis recyclés vers la section réactionnelle (via la conduite 18) est réalisée en aval du prélèvement de la purge de l'unité (flux 16) dans la section de fractionnement (32) dont les conditions opératoires sont indépendantes de celles de la colonne de séparation (20)
- le procédé selon l'invention permet une adaptation des conditions opératoires de chacune des étapes, de purge des HPNA et de séparation des produits non-convertis des produits valorisables. Cette adaptation conduit à une réduction de l'accumulation de HPNA dans la boucle de recyclage. Cette réduction de l'accumulation de HPNA dans la boucle de recyclage permet de réduire la désactivation prématurée des catalyseurs mis en oeuvre et ainsi d'augmenter leurs durées de cycle et de vie.

### DESCRIPTION DETAILLEE DE L'INVENTION

### Etape a) d'hydrocraquage, réalisée dans une section réactionnelle (2) d'hydrocraquage :

Conformément à l'invention, le procédé comprend une étape a) d'hydrocraquage d'une charge (1) comprenant de préférence 20 à 100% volume de composés ayant une température d'ébullition supérieure à 200°C, une teneur en soufre comprise entre 0.01 et 5% poids, une teneur en Azote supérieure à 500 ppm poids, une teneur cumulée en Nickel et Vanadium inférieure à 2 ppm poids et une teneur en Asphaltènes inférieure à 3000 ppm poids, de préférence inférieure à 1000 ppm poids, ladite étape d'hydrocraquage de ladite charge, est réalisée à une température supérieure à 200°C, une pression supérieure à 1 MPa, une vitesse spatiale comprise entre 0,1 e 20 h-1 et un rapport volumique litre d'hydrogène / litre de charge compris entre 80 et 5000.

L'étape a) d'hydrocraquage est mise en oeuvre à une température supérieure à 200 °C, de préférence comprise à 250 et 480°C, de préférence comprise entre 320 et 450°C, et très préférentiellement entre 330 et 435°C, à une pression supérieure à 1 MPa, de préférence entre 2 et 25 MPa, très préférentiellement entre 3 et 20 MPa, la vitesse spatiale étant comprise entre 0,1 et 20h-1 et de préférence comprise entre 0,1 et 6h-1, de manière plus préférée comprise entre 0,2 et 3h-1, et la quantité d'hydrogène introduite est telle que le rapport volumique litre d'hydrogène / litre d'hydrocarbure soit compris entre 80 et 5000 l/l et de préférence comprise entre 100 et 2000 l/l. Ces conditions opératoires utilisées dans les procédés d'hydrocraquage permettent généralement d'atteindre des conversions en produits ayant des températures d'ébullition inférieures à 340°C, et de préférence inférieures à 370°C, par passe supérieures à 15 % et de préférence entre 20 et 95 %.

De préférence, la charge (1) traitée à l'étape a) d'hydrocraquage peut être des LCO (light cycle oil - gazoles gazeux issus d'une unité de craquage catalytique), des distillats atmosphériques, des distillats sous vide par exemple gazoles issus de la distillation directe du brut ou d'unités de conversion telles que le FCC, le coker ou la viscoréduction, ainsi que des charges provenant d'unités d'extraction d'aromatiques des bases d'huile lubrifiante ou issues du déparaffinage au solvant des bases d'huile lubrifiante, ou encore des distillats provenant de procédés de désulfuration ou d'hydroconversion en lit fixe ou en lit bouillonnant de RAT (résidus atmosphériques) et/ou de RSV (résidus sous vide) et/ou d'huiles désasphaltées, ou encore la charge peut être une huile désasphaltée, des effluents d'une unité de Fisher-Tropsch ou encore tout mélange des charges précédemment citées. La liste ci-dessus n'est pas limitative.

La charge (1) traitée à l'étape a) d'hydrocraquage comprend 20 à 100 % volume, de préférence de 20 à 95 % volume, de préférence de 50 à 95 % volume, et de manière plus préférée de 70 à 95 % volume de composés ayant une température d'ébullition supérieure à 200°C, de préférence supérieur à 300°C, très préférentiellement supérieure à 370°C.

La teneur en azote des charges (1) traitées dans les procédés d'hydrocraquage est supérieure à 500 ppm en poids, de préférence comprise entre 500 et 10000 ppm en poids, de manière plus préférée comprise entre 700 et 4500 ppm en poids et de manière encore plus préférée comprise entre 1000 et 4500 ppm en poids.

De préférence, la teneur en soufre des charges (1) traitées dans les procédés d'hydrocraquage est comprise entre 0,01 et 5 % poids, de manière préférée comprise entre 0,2 et 4 % et de manière encore plus préférée entre 0,5 et 3 %. La charge peut éventuellement contenir des métaux. La teneur cumulée en nickel et vanadium des charges traitées dans les procédés d'hydrocraquage est de préférence inférieure à 2 ppm poids. La teneur en asphaltènes est inférieure à 3000 ppm poids, de manière préférée inférieure à 1000 ppm poids, de manière encore plus préférée inférieure à 300 ppm poids.

Le catalyseur d'hydrocraquage est mis en contact, en présence d'hydrogène, avec les charges décrites précédemment.

L'hydrocraquage est réalisé en lit fixe ou en lit bouillonnant, et de préférence en lit fixe, et dans un ou plusieurs réacteurs.

L'étape a) d'hydrocraquage peut être opéré dans un seul ou plusieurs réacteurs en lit bouillonnant, avec ou sans recyclage lourd de la fraction non convertie, éventuellement en association avec un catalyseur d'hydroraffinage situé dans un réacteur en lit fixe ou en lit bouillonnant en amont du catalyseur d'hydrocraquage. Le lit bouillonnant s'opère avec retrait de catalyseur usé et ajout journalier de catalyseur neuf afin de conserver une activité du catalyseur stable.

L'étape a) d'hydrocraquage selon l'invention couvre les domaines de pression et de conversion allant de l'hydrocraquage doux à l'hydrocraquage haute pression. Il peut être opéré selon plusieurs variantes.

On entend par hydrocraquage doux, un hydrocraquage conduisant à des conversions modérées, généralement inférieures à 40 %, et fonctionnant à basse pression, généralement entre 2 MPa et 9 MPa. Le catalyseur d'hydrocraquage peut être utilisé seul, en un seul ou plusieurs lits catalytiques en lit fixe, dans un ou plusieurs réacteurs, dans un schéma d'hydrocraquage dit en une étape, avec ou sans recyclage lourd de la fraction non convertie, éventuellement en association avec un catalyseur d'hydroraffinage situé en amont du catalyseur d'hydrocraquage.

L'hydrocraquage à haute pression est réalisé à une pression supérieure à 9MPa, et le plus souvent supérieure à 10 MPa.

L'étape a) d'hydrocraquage peut selon une première variante être opéré selon un schéma d'hydrocraquage dit en deux étapes avec séparation intermédiaire entre les deux zones réactionnelles. Dans une étape donnée, le catalyseur d'hydrocraquage peut être utilisé dans un ou plusieurs réacteurs en association ou non avec un catalyseur d'hydroraffinage situé en amont du catalyseur d'hydrocraquage.

L'étape a) d'hydrocraquage peut être opérée selon une deuxième variante, dite en une étape. Cette variante comprend généralement en premier lieu un hydroraffinage poussé qui a pour but de réaliser une hydrodéazotation et une hydrodésulfuration poussées de la charge avant que celle-ci ne soit envoyée sur le catalyseur d'hydrocraquage proprement dit, en particulier dans le cas où celui-ci comporte une zéolithe. Cet hydroraffinage poussé de la charge n'entraine qu'une conversion limitée de cette charge. La conversion, qui reste insuffisante, doit donc être complétée sur le catalyseur d'hydrocraquage plus actif.

Dans le cas où l'étape a) d'hydrocraquage comprend un recyclage de la fraction non convertie, le flux de recyclage peut soit être alimenté directement dans le réacteur d'hydrocraquage, soit être mélangé avec la charge alimentant ledit réacteur d'hydrocraquage.

De façon générale, la section d'hydrocraquage (2) contient un ou plusieurs lits de catalyseurs d'hydrocraquage identiques ou différents. Eventuellement lesdits catalyseurs d'hydrocraquage sont utilisés en combinaison avec un ou plusieurs catalyseurs d'hydrotraitement. Les catalyseurs d'hydrocraquage et d'hydrotraitement (appelé encore dans le texte hydroraffinage) sont bien connus de l'Homme du métier. Ils contiennent un support et au moins un métal choisi dans les groupes VIII et/ou VIB. Généralement, le métal du groupe VIII est le Nickel et/ou le Cobalt et le métal du groupe VIB est le Molybdène et/ou le Tungstène.

Le support des catalyseurs d'hydrocraquage comprend généralement une silice-alumine et/ou une zéolite, et un liant, le plus souvent aluminique. Le support des catalyseurs d'hydrotraitement est généralement à base d'alumine.

De préférence le catalyseur ou les catalyseurs mis en oeuvre dans l'étape a) d'hydrocraquage peuvent avoir été imprégnés par une phase active ou non. De manière préférée, les catalyseurs sont imprégnés par une phase hydro-déshydrogénante. De manière très préférée, la phase CoMo ou NiMo est utilisée. Ces catalyseurs peuvent présenter de la macroporosité.

Les zéolithes utilisables sont naturelles ou synthétiques et peuvent être par exemple être choisies parmi les zéolithes X, Y ou L, la faujasite, la zéolite Béta, la mordénite, l'érionite ou la chabasite, prises seules ou en mélanges. De préférence, la zéolite Y et la faujasite sont utilisées.

Dans le cas où la charge contient des composés de type résines et/ou asphaltènes, il peut être avantageux de traiter préalablement à l'étape a) ladite charge sur un lit de catalyseur, de garde ou d'adsorbant différent du catalyseur d'hydrocraquage. Les catalyseurs ou lits de garde utilisés ont la forme de sphères ou d'extrudés. Toute autre forme, connu de l'homme du métier peut être mise en oeuvre. De préférence, les formes sont choisies parmi les cylindres creux, les anneaux creux, les anneaux de Raschig, les cylindres creux dentelés, les cylindres creux crénelés, les roues de charrettes « pentaring », les cylindres a multiples trous et tout autre forme connu de l'homme du métier.

De préférence, au moins un four (10) chauffe la charge en amont de la section réactionnelle (2) ou selon une variante uniquement l'hydrogène nécessaire à ladite section réactionnelle (2), ou selon une autre variante l'hydrogène et la charge avant leur introduction dans la section réactionnelle (2). L'hydrogène mise en oeuvre peut être mélangé à ladite charge (1) et/ou introduit directement dans la section réactionnelle (2). Dans toutes ces variantes l'hydrogène est introduit par la conduite (8).

### Etape b) de séparation dans un séparateur chaud à haute pression (4a)

Conformément à l'invention, le procédé comprend une étape b) de séparation de l'effluent obtenu à l'issu de l'étape a) d'hydrocraquage par la mise en oeuvre d'au moins un séparateur chaud à haute pression (4a). Dans ladite étape b), il est obtenu un effluent gazeux en tête du séparateur chaud à haute pression et un effluent lourd en fond du séparateur chaud à haute pression.

Le séparateur chaud à haute pression (4a) mis en oeuvre dans l'étape b) permet la séparation de l'effluent lourd et du gaz présents dans l'effluent issu de l'étape a) d'hydrocraquage. Tout type de séparateur chaud permettant cette séparation, connu de l'homme du métier peut être mis en oeuvre. De préférence, ledit séparateur chaud à haute pression est choisi parmi un ballon de flash, un stripeur, ou une simple colonne à distiller. Préférentiellement, le séparateur chaud à haute pression est un ballon flash.

Le séparateur chaud à haute pression (4a) est mis en oeuvre à une pression supérieure à 0,5 MPa, de préférence entre 1,5 et 25 MPa, très préférentiellement entre 2,5 et 20 MPa. Typiquement la pression est inférieure à la pression mise en oeuvre à l'étape a) d'hydrocraquage, de préférence plus basse de 0,1 MPa à 1,0 MPa. La température du séparateur chaud à haute pression (4a) est comprise entre 200°C et 450°C, de préférence entre 250°C et 380°C et de manière très préférée entre 260°C et 360°C.

### Etape b') optionnelle de séparation dans un séparateur chaud à moyenne pression (4c)

Optionnellement, l'effluent lourd (9a1) issu du fond du séparateur chaud à haute pression(4a) de l'étape b) est traité dans un séparateur chaud à moyenne pression (4c).

De préférence, le flux lourd (9a1) issu du séparateur chaud à haute pression (4a) est détendu dans une vanne ou une turbine et dirigé dans un séparateur chaud à moyenne pression (4c).

La pression totale du séparateur (4c) est préférentiellement celle requise, selon les connaissances de l'homme du métier, pour récupérer de façon efficace l'hydrogène compris dans la fraction gazeuse séparée dans le séparateur chaud à moyenne pression (4c), et/ou pour alimenter le séparateur froid à moyenne pression (4d) avec le flux gazeux (11a) séparé dans le séparateur chaud à moyenne pression (4c). La pression du séparateur chaud à moyenne pression (4c) est inférieure à 4,5 MPa, de préférence comprise entre 1,0 MPa et 4,5 MPa, de préférence comprise entre 1,5 MPa et 3,5 MPa. La température du séparateur chaud à moyenne pression (4c) est comprise entre 200°C et 450°C, de préférence entre 250°C et 380°C et de manière très préférée entre 260°C et 360°C.

Tout type de séparateur chaud à moyenne pression permettant cette séparation, connu de l'homme du métier peut être mis en oeuvre. De préférence ledit séparateur chaud à moyenne pression est choisi parmi un ballon de flash, un stripeur, ou une simple colonne à distiller. Préférentiellement, le séparateur chaud à moyenne pression est un ballon flash.

### Etape c) de séparation dans un séparateur froid à haute pression (4b)

Conformément à l'invention, le procédé comprend une étape c) de séparation de l'effluent gazeux (3b) obtenu à l'issue de l'étape b) en tête du séparateur chaud à haute pression (4a), est traité dans un séparateur froid à haute pression (4b) à une température comprise entre 0 et 200°C. Dans ladite étape c), il est obtenu un effluent gazeux en tête du séparateur froid à haute pression et un effluent lourd en fond du séparateur froid à haute pression.

Le séparateur froid à haute pression (4b), dont la charge est le flux gazeux issu du séparateur chaud à haute pression (4a), est mis en oeuvre à une pression supérieure à 0,5 MPa, de préférence entre 1,5 et 25 MPa, très préférentiellement entre 2,5 et 20 MPa. Typiquement la pression est inférieure à la pression mise en oeuvre à l'étape b), de préférence plus basse de 0,1 MPa à 1,0 MPa.

La température du ballon séparateur froid à haute pression 4b est comprise entre 0 et 200°C, de préférence la plus basse possible compte tenu des moyens de refroidissement connu de l'homme du métier et pouvant être mis en oeuvre conformément aux contraintes industrielles. Ledit refroidissement permet de maximiser la pureté de l'hydrogène recyclé.

Tout type de séparateur froid permettant cette séparation, connu de l'homme du métier peut être mis en oeuvre. De préférence ledit séparateur froid à haute pression est choisi parmi un ballon de flash, un stripeur, ou une simple colonne à distiller. Préférentiellement, le séparateur froid à haute pression est un ballon flash.

L'effluent gazeux (5) issu de l'étape c) sortant en tête du séparateur froid à haute pression (4b), ledit effluent gazeux (5) encore appelé hydrogène recyclé, peut être optionnellement purifié dans une colonne (5a) avant d'être comprimé dans la section de compression (7) et envoyé par une conduite (8) vers la charge (1) ou dans la section réactionnelle (2). Avantageusement l'effluent gazeux (5) obtenu en tête du séparateur froid à haute pression (4b) comprend majoritairement de l'hydrogène, soit entre 50 et 100 % volume d'hydrogène. De préférence, l'hydrogène ainsi obtenu est recyclé vers l'étape a) d'hydrocraquage par tout moyen connu de l'homme du métier.

### Etape c') optionnelle de séparation dans un séparateur froid à moyenne pression (4d)

Optionnellement l'effluent lourd (9b1) issu du fond du séparateur froid à haute pression (4b) mis en oeuvre à l'étape c) est traité dans un séparateur froid à moyenne pression (4d).

L'effluent lourd (9b1) obtenu en fond du séparateur froid à haute pression (4b) à l'issue de l'étape c) et/ou l'effluent gazeux (11a) obtenu en tête du séparateur chaud à moyenne pression (4c) à l'issue de l'étape b') est engagé dans une étape c') de séparation dans un séparateur froid à moyenne pression (4d).

Optionnellement, l'effluent lourd (9b1) obtenu en fond du séparateur froid à haute pression (4b) est détendu dans une vanne ou une turbine et dirigé dans un séparateur froid à moyenne pression (4d).

La pression totale dudit séparateur froid à moyenne pression (4d) est préférentiellement celle requise pour récupérer de façon efficace l'hydrogène compris dans la fraction gazeuse séparée dans le séparateur froid à moyenne pression. Cette récupération de l'hydrogène est de préférence réalisée dans une unité d'adsorption par inversion de pression. La pression du séparateur froid à moyenne pression (4d) est inférieure à 4,5 MPa, de préférence comprise entre 1,0 MPa et 4,5 MPa, de préférence comprise entre 1,5 MPa et 3,5 MPa. La température du ballon séparateur froid à moyenne pression (4d) est comprise entre 0 et 200°C, de préférence la plus basse possible compte tenu des moyens de refroidissement connu de l'homme du métier et pouvant être mis en oeuvre conformément aux contraintes industrielles. Ledit refroidissement permet de maximiser la pureté de l'hydrogène dans la fraction gazeuse.

Tout type de séparateur froid permettant cette séparation, connu de l'homme du métier peut être mis en oeuvre. De préférence ledit séparateur froid à moyenne pression est choisi parmi un ballon de flash, un stripeur, ou une simple colonne à distiller. Préférentiellement, le séparateur froid à moyenne pression est un ballon flash.

De préférence, une partie de l'effluent lourd obtenu en fond du séparateur froid à moyenne pression (4d) mis en oeuvre à l'étape c'), peut être réinjecté dans le séparateur froid à haute pression (4b) mis en oeuvre à l'étape c) afin de favoriser la dissolution des hydrocarbures gazeux dans l'effluent lourd obtenu en fond de ce dernier et ainsi maximiser la pureté en hydrogène du gaz recycle.

### Etape d) de séparation dans une colonne de séparation (20)

Conformément à l'invention, le procédé comprend une étape d) de séparation d'au moins une fraction l'effluent lourd (9a) obtenu à l'étape b) ou éventuellement à l'étape b'). Ladite étape d) est mise en oeuvre dans une colonne de séparation (20) choisie parmi un stripeur ou une colonne rebouillie. Dans ladite étape d), il est obtenu un effluent gazeux en tête de ladite colonne et un résidu en fond de colonne. Au moins une partie dudit résidu, concentré en HPNA, est éliminée par la purge (flux 16). On entend par résidu concentré en HPNA, un résidu plus riche en HPNA que la charge de la colonne de séparation (20).

La colonne de séparation (20), vise à concentrer les HPNA dans la fraction lourde de l'effluent de la section réactionnelle 2. De préférence, la colonne de séparation est un stripeur. Le gaz de stripage est par exemple un gaz contenant de l'hydrogène ou de la vapeur d'eau. De préférence on utilise de la vapeur d'eau. De préférence, la pression de cette colonne de séparation (20) sera suffisamment élevée pour que les gaz (22) issus de la tête de la colonne de séparation (20) puissent être envoyés vers la section de fractionnement (32). La pression totale de la colonne de séparation est comprise entre 0,001 MPa et 2,0 MPa, de préférence entre 0,01 et 1,0 MPa, et très préférentiellement entre 0,1 et 0,5 MPa. La température de l'alimentation de la colonne de séparation est comprise entre 200°C et 450°C, de préférence entre 250°C et 380°C et de manière très préférée entre 260°C et 360°C.

Tout ou une partie de l'effluent lourd issu de de l'étape b) ou de l'étape b') est envoyée vers la colonne de séparation (20), de préférence entre 0,1 et 100 % poids (pds) par rapport au flux total issu de l'étape b) ou b') (9a), de préférence entre 0,1 et 70 % poids, de manière plus préférée entre 0,1 et 50 % poids, de manière très préférée entre 0,5 et 30% poids, préférentiellement entre 0,5 et 10% poids et très préférentiellement entre 0,1 et 10 % poids. La partie de l'effluent lourd non dirigé vers la colonne de séparation (20) est engagée dans l'étape e) de fractionnement, et/ou dans l'étape d') de séparation.

L'effluent gazeux (22) obtenu en tête de la colonne de séparateur (20) est engagé dans l'étape e) de fractionnement, et/ou dans l'étape d') de séparation décrite ci-après.

### Etape d') optionnelle de séparation dans une colonne de séparation (12)

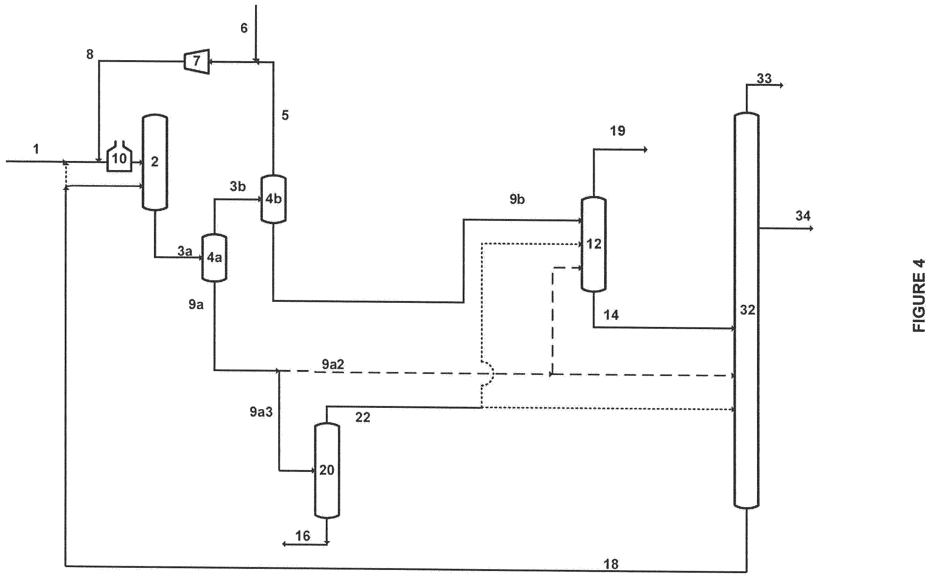

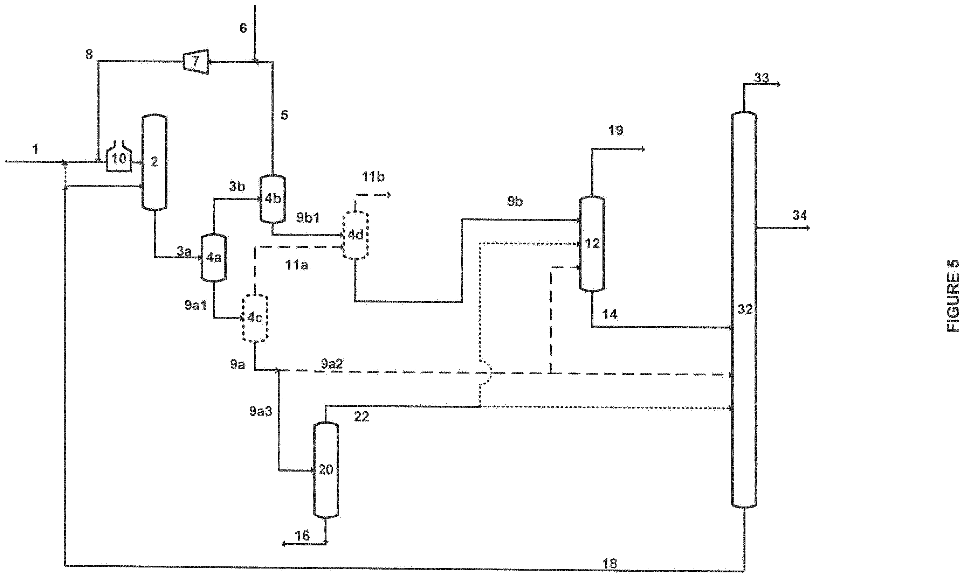

Selon une variante de l'invention, présentée en figure 4 et en figure 5, l'effluent (flux 9b) issu de l'étape c) (figure 4) ou de l'étape c') (figure 5) est traité dans une colonne de séparation (12), choisi parmi un stripeur ou une colonne rebouillie, afin de séparer les gaz craqués d'au moins l'un des produits non convertis suivants : naphta (gazeux et lourd), diesel, kérosène ou résidu, et dont le produit de fond (flux 14) constitue une charge de la section de fractionnement (32).

Dans une variante préférée, au moins une partie de la fraction gazeuse obtenue en tête de la colonne de séparation (20) mis en oeuvre à l'étape d) alimente la colonne de séparation (12) par le flux (22).

La colonne de séparation (12) est de préférence strippée au moyen de tout gaz de stripage tel que par exemple un gaz contenant de l'hydrogène ou de la vapeur d'eau. De préférence, on utilise de la vapeur d'eau pour réaliser ledit stripage. La pression totale de la colonne de séparation (12) est typiquement comprise entre 0,2 MPa et 2,5 MPa, de préférence entre 0,3 et 2,0 MPa et très préférentiellement entre 0,4 et 1,0 MPa. La température de l'alimentation de la colonne de séparation est comprise entre 150°C et 450°C, de préférence entre 150°C et 350°C et de manière très préférée entre 200°C et 340°C.

### Etape e) de fractionnement dans une section de fractionnement (32)

Conformément à l'invention, le procédé comprend une étape e) de fractionnement de un ou plusieurs effluents obtenus à l'issue de l'étape c), ou c') ou d') et de l'effluent gazeux obtenu à l'étape d), ladite étape étant mise en oeuvre dans une section de fractionnement (32). Dans ladite étape e), il est obtenu au moins une fraction naphta, au moins une fraction gazole et un résidu. Optionnellement une fraction gazeuse peut également être récupérée.

De préférence, la section de fractionnement (32) est constituée d'une ou plusieurs colonnes comprenant plusieurs plateaux et/ou garnissages internes qui peuvent être opérées de préférence à contrecourant. Ces colonnes peuvent avantageusement être strippées à la vapeur d'eau et peuvent comprendre au moins un rebouilleur afin de faciliter la vaporisation. Ladite vaporisation permet de séparer le H₂S et les composant gazeux, par exemple le méthane, l'éthane, le propane, le butane, des effluents, ainsi que les coupes hydrocarbonées présentant des points d'ébullition dans le domaine des essences, des naphtas, du kérosène, du gasoil et une fraction lourde (18) récupérée en fond de colonne dont tout ou partie peut être recyclée à la section d'hydrocraquage. La pression totale des colonnes de la section de fractionnement (32) est typiquement comprise entre 0,001 MPa et 0,5 MPa, généralement entre 0,01 MPa et 0,2 MPa, de préférence entre 0,1 et 0,2 MPa.

Il est bien connu de l'homme du métier que les différents flux alimentant la section de fractionnement (32) peuvent soit être alimentés séparément soit être mélangés, tous ou par groupes, avant la section de fractionnement (32).

Différentes combinaisons des flux alimentant la section de fractionnement (32) sont envisageables en fonction des variantes de l'invention. Lesdits flux alimentant la section de fractionnement (32) correspondent aux flux (9b) issus de la zone de séparation froide, du flux 9a2 issu du flux 9a issu de la zone de séparation chaude, du flux gazeux (22) issu du séparateur (20), du flux lourd (14) issu du séparateur (12), et éventuellement du flux lourd issu du séparateur (20).

La section de fractionnement comprend une colonne de distillation atmosphérique , et éventuellement une colonne de distillation sous vide. Dans le cas où la section de fractionnement (32) comprend, ou est constituée, d'au moins une colonne atmosphérique et d'au moins une colonne sous vide, les flux (9b) et (22) alimentent la colonne atmosphérique, l'effluent lourd issu du séparateur (20), le cas échéant, est envoyé soit en alimentation de la colonne atmosphérique soit en alimentation de la colonne sous vide.

Optionnellement au moins un four peut chauffer au moins l'un des effluents entrant dans la section de fractionnement (32), typiquement à une température comprise en 200°C et 450°C, de préférence entre 300°C et 400°C.

Dans un mode particulier de l'invention, le procédé comprend les étapes a), b), c), d), et e), ou les étapes a), b), b'), c), d), et e), ou les étapes a), b), c), c'), d), e) ou les étapes a), b), b') c), c', d), et e), ou les étapes a), b), c), d), d') et e), ou les étapes a), b), b'), c), d), d') et e), ou les étapes a), b), c), c'), d), d') et e), ou les étapes a), b), b'), c), c'), d), d') et e).

Dans un mode particulier de l'invention, le procédé est constitué des étapes a), b), c), d), et e), ou des étapes a), b), b'), c), d), et e), ou des étapes a), b), c), c'), d), e) ou des étapes a), b), b') c), c', d), et e), ou des étapes a), b), c), d), d') et e), ou des étapes a), b), b'), c), d), d') et e), ou des étapes a), b), c), c'), d), d') et e), ou des étapes a), b), b'), c), c'), d), d') et e).

### Dispositif

L'invention concerne également un dispositif qui est avantageusement mise en oeuvre pour réaliser le procédé selon l'invention.

Ledit dispositif est défini dans la revendication 11.

Dans des variantes de réalisation, le dispositif comprend en outre,
- en amont de la section réactionnelle (2), un four (10), chauffant la charge ou le mélange composé de la charge et de l'hydrogène, muni d'une conduite d'introduction (1) de ladite charge ou dudit mélange et d'une conduite de soutirage de l'effluent chauffé vers la section réactionnelle (2).
- dans la première zone chaude de séparation un séparateur chaud moyenne pression (4c), muni d'une conduite (9a1) d'introduction de l'effluent lourd issu du séparateur chaud haute pression (4a), muni d'une conduite (9a) de soutirage d'un effluent lourd et d'une conduite (11a) de l'effluent gazeux.
- dans la seconde zone froide de séparation un séparateur froid moyenne pression (4d), muni d'une conduite (9b1) d'introduction de l'effluent lourd issu du séparateur froid haute pression (4b), muni d'une conduite (9b) de soutirage d'un effluent lourd et d'une conduite (11b) de l'effluent gazeux.
- dans la section de fractionnement une colonne de séparation (12) muni d'au moins une conduite (9b) d'introduction de l'effluent lourd issu d'un séparateur de zone froide de séparation, et/ou une conduite d'introduction de l'effluent gazeux issu de l'étape d), et munie d'une conduite de (19) d'évacuation de l'effluent gazeux et d'une conduite (14) de soutirage de l'effluent lourd.
- dans la colonne de fractionnement (32), une conduite (33) d'évacuation des gaz.

Le dispositif selon l'invention ne comprend pas de stripeur positionné en aval de la section de fractionnement (32), c'est-à-dire mis en oeuvre pour le traitement d'un ou plusieurs effluents issus de la section de fractionnement (32).

### EXEMPLES

Les exemples ci-dessous illustrent l'invention sans en limiter la portée.

Dans les exemples ci-après, la section de fractionnement 32 est constituée d'une unique colonne atmosphérique.

Dans les exemples ci-après, la charge comporte 93% volume de composés ayant un point d'ébullition supérieur à 340°C, une teneur en soufre de 3%, une teneur en azote de 1400 ppm poids, une teneur cumulée en Nickel et Vanadium de 1,3 ppm poids et une teneur en asphaltènes de 450 ppm poids.

Dans les exemples ci-après, dans la section d'hydrocraquage, le catalyseur d'hydrocraquage est mis en oeuvre à une température de 385°C, à une pression de 13,9 MPa, une vitesse spatiale de 1,5 h-1 et un rapport volumique litre d'hydrogène / litre de charge de 900.

### Exemple 1 : non conforme

Cet exemple est basé sur la configuration de la figure 1. Les propriétés et compositions sont reportées dans le tableau 1 ci-dessous :

**Tableau 1 : propriété des flux selon le schéma de la figure 1 au démarrage (avant accumulation des HPNA)**

| **Configuration** | | **Flux de la** **Figure 1** | | | | | |
|---|---|---|---|---|---|---|---|
| **Numéro de Flux** | | 1 | 9a | 16 | 18 | 35 | 37 |
| **Rendement par rapport au flux 1** | %pds | 100,0 | 65,1 | 0,5 | 90,0 | 64,1 | 26,4 |
| **Quantité de diesel dans le flux** | %pds | 22,0 | 18,1 | 2,0 | 3,2 | 2,0 | 6,1 |
| **Densité relative (Specific gravity :SG)¹** | | 0,923 | 0,823 | 0,844 | 0,843 | 0,844 | 0,841 |

| **HPNA** | | | | | | | |
|---|---|---|---|---|---|---|---|
| Coronène | ppm pds | 0 | 7 | 6 | 5 | 6 | 4 |
| Dibenzo(e,ghi)pérylène | ppm pds | 0 | 1 | 1 | 1 | 1 | 0 |
| Naphto [8.2.1 abc] coronène | ppm pds | 0 | 3 | 3 | 2 | 3 | 1 |
| Ovalene | ppm pds | 0 | 2 | 2 | 2 | 2 | 0 |
| **Total** | **ppm pds** | **0** | **13** | **12** | **10** | **12** | **5** |
| | | | | | | | |

| **TBP, %pds** | | | | | | | |
|---|---|---|---|---|---|---|---|
| Point d'ébullition Initial | °C | 284 | (2) | 354 | 341 | 354 | 341 |
| 10% | °C | 356 | 295 | 410 | 398 | 410 | 387 |
| 50% | °C | 425 | 446 | 471 | 455 | 471 | 420 |
| 90% | °C | 519 | 529 | 537 | 530 | 537 | 480 |
| Point d'ébullition final | °C | 588 | 559 | 559 | 559 | 559 | 545 |

| | | | | | | | |
|---|---|---|---|---|---|---|---|
| 1 : Densité relative SG= ρ_{échantillon} à 20°C /ρ_{H20} à 4°C ou ρ est la densité exprimée en g/cm³ 2 : Donnée non disponible. Présence d'une phase gazeuse à pression atmosphérique. | | | | | | | |

**Tableau 2 : propriété des flux selon le schéma de la figure 1 en opération stabilisée (accumulation des HPNA stable)**

| **Configuration** | | **Flux de la** **Figure 1** | | | | | |
|---|---|---|---|---|---|---|---|
| **Numéro de Flux** | | **1** | **9a** | **16** | **18** | **35** | **37** |
| **Rendement par rapport au flux 1** | %pds | 100,0 | 65,1 | 0,5 | 90,0 | 64,1 | 26,4 |
| **Quantité de diesel dans le flux** | %pds | 22,0 | 18,1 | 2,0 | 3,2 | 2,0 | 6,1 |
| **Densité relative (Specific gravity :SG)⁽¹⁾** | | 0,923 | 0,823 | 0,844 | 0,843 | 0,844 | 0,841 |

| **HPNA** | | | | | | | |
|---|---|---|---|---|---|---|---|
| Coronène | ppm pds | 0 | 1181 | 989 | 887 | 989 | 643 |
| Dibenzo(e,ghi)pérylène | ppm pds | 0 | 192 | 157 | 144 | 157 | 116 |
| Naphto [8.2.1 abc] coronène | ppm pds | 0 | 403 | 384 | 294 | 384 | 78 |
| Ovalene | ppm pds | 0 | 277 | 270 | 201 | 270 | 35 |
| **Total** | **ppm pds** | **0** | **2053** | **1800** | **1526** | **1800** | **872** |
| | | | | | | | |

| **TBP, %pds** | | | | | | | |
|---|---|---|---|---|---|---|---|
| Point d'ébullition Initial | °C | 284 | (2) | 354 | 341 | 354 | 341 |
| 10% | °C | 356 | 295 | 410 | 398 | 410 | 387 |
| 50% | °C | 425 | 446 | 471 | 455 | 471 | 420 |
| 90% | °C | 519 | 529 | 537 | 530 | 537 | 480 |
| Point d'ébullition final | °C | 588 | 559 | 559 | 559 | 559 | 545 |

| | | | | | | | |
|---|---|---|---|---|---|---|---|
| (1) : Densité relative SG= ρ_{échantillon} à 20°C /ρ_{H20} à 4°C ou ρ est la densité exprimée en g/cm³ (2) : Donnée non disponible. Présence d'une phase gazeuse à pression atmosphérique. | | | | | | | |

Il est à noter que compte tenu de la configuration, les flux 16 et 35 ont exactement les mêmes compositions et propriétés.

Les conditions opératoires de la section de fractionnement (32) et du stripeur latéral (40) utilisées sont reportées dans le tableau 3 ci-dessous :

**Tableau 3 : Conditions opératoires de la section fractionnement**

| **Conditions opératoires du fractionnement 32** | | **Figure 1** |
|---|---|---|
| Pression haut de colonne | MPa | 0,19 |
| Pression bas de colonne | MPa | 0,24 |
| Température Charge entrée | °C | 380 |
| Nombre de plateaux théoriques | | 50 |
| Débit de vapeur d'eau strippant | kg/t ⁽¹⁾ | 74 |

| **Conditions opératoires du stripeur latéral 40** | | |
|---|---|---|
| Pression haut de colonne | MPa | 0,23 |
| Pression bas de colonne | MPa | 0,24 |
| Nombre de plateaux théoriques | | 6 |
| Débit de vapeur d'eau strippant | kg/t ⁽¹⁾ | 122 |

| | | |
|---|---|---|
| (1) : kg de vapeur d'eau/tonne de fond | | |

### Exemple 2 : selon l'invention

Cet exemple est selon l'invention et selon la figure 2 dans laquelle une partie du flux 9a est envoyé dans la conduite 9a3.

Les tableaux 4 et 5 ci-dessous donnent les caractéristiques des courants 9a, 9a2, 9a3, 16, 18 et 22 dans la configuration de l'invention (figure 2). Les conditions opératoires utilisées sont reportées tableau 4 :

**Tableau 4 : propriété des flux selon le schéma de la figure 2 au démarrage (avant accumulation des HPNA)**

| **Configuration** | | **Flux de la** **Figure 2** | | | | | | |
|---|---|---|---|---|---|---|---|---|
| **Numéro de Flux** | | 1 | 9a | 9a2 | 9a3 | 16 | 18 | 22 |
| **Rendement par rapport** | %pds | 100,0 | 65,1 | 64,5 | 0,6 | 0,5 | 90,0 | 0,1 |
| **Quantité de diesel dans** | %pds | 22,0 | 18,1 | 18,1 | 18,1 | 10,5 | 3,2 | 48,0 |
| **Densité relative (Specific** | | 0,923 | 0,823 | 0,823 | 0,823 | 0,833 | 0,843 | 0,783 |

| **HPNA** | | | | | | | | |
|---|---|---|---|---|---|---|---|---|
| Coronène | ppm pds | 0 | 7 | 7 | 7 | 9 | 5 | 0 |
| Dibenzo(e,ghi)pérylène | ppm pds | 0 | 1 | 1 | 1 | 1 | 1 | 0 |
| Naphto [8.2.1 abc] | ppm pds | 0 | 3 | 3 | 3 | 4 | 2 | 0 |
| Ovalene | ppm pds | 0 | 2 | 2 | 2 | 3 | 2 | 0 |
| **Total** | **ppm pds** | **0** | **13** | **13** | **13** | **17** | **10** | **0** |
| | | | | | | | | |

| **TBP, %pds** | | | | | | | | |
|---|---|---|---|---|---|---|---|---|
| Point d'ébullition Initial | °C | 284 | (2) | (2) | (2) | 290 | 349 | (2) |
| 10% | °C | 356 | 295 | 295 | 295 | 379 | 398 | 173 |
| 50% | °C | 425 | 446 | 446 | 446 | 455 | 294 | 465 |
| 90% | °C | 519 | 529 | 529 | 529 | 530 | 415 | 533 |
| Point d'ébullition final | °C | 588 | 559 | 559 | 559 | 559 | 527 | 559 |

| | | | | | | | | |
|---|---|---|---|---|---|---|---|---|
| (1) : Densité relative SG= ρ_{échantillon} à 20°C /ρ_{H20} à 4°C ou ρ est la densité exprimée en g/cm³ (2) : Donnée non disponible. Présence d'une phase gazeuse à pression atmosphérique. | | | | | | | | |

**Tableau 5 : propriété des flux selon le schéma de la figure 2 en opération stabilisée (accumulation des HPNA stable)**

| **Configuration** | | **Flux de la** **Figure 2** | | | | | | |
|---|---|---|---|---|---|---|---|---|
| **Numéro de Flux** | | 1 | 9a | 9a2 | 9a3 | 16 | 18 | 22 |
| **Rendement par rapport au** | %pds | 100,0 | 65,1 | 64,5 | 0,6 | 0,5 | 90,0 | 0,1 |
| **Quantité de diesel dans le** | %pds | 22,0 | 18,1 | 18,1 | 18,1 | 10,5 | 3,2 | 48,0 |
| **Densité relative (Specific** | | 0,923 | 0,823 | 0,823 | 0,823 | 0,833 | 0,843 | 0,783 |

| **HPNA** | | | | | | | | |
|---|---|---|---|---|---|---|---|---|
| Coronène | ppm | 0 | 826 | 826 | 826 | 989 | 619 | 1 |
| Dibenzo(e,ghi)pérylène | ppm | 0 | 131 | 131 | 131 | 157 | 99 | 0 |
| Naphto [8.2.1 abc] coronène | ppm | 0 | 313 | 313 | 313 | 384 | 228 | 0 |
| Ovalene | ppm | 0 | 219 | 219 | 219 | 270 | 159 | 0 |
| **Total** | **ppm** | **0** | **1489** | **1489** | **1489** | **1800** | **1105** | **1** |
| | | | | | | | | |

| **TBP, %pds** | | | | | | | | |
|---|---|---|---|---|---|---|---|---|
| Point d'ébullition Initial | °C | 284 | (2) | (2) | (2) | 290 | 349 | (2) |
| 10% | °C | 356 | 295 | 295 | 295 | 379 | 398 | 173 |
| 50% | °C | 425 | 446 | 446 | 446 | 455 | 294 | 465 |
| 90% | °C | 519 | 529 | 529 | 529 | 530 | 415 | 533 |
| Point d'ébullition final | °C | 588 | 559 | 559 | 559 | 559 | 527 | 559 |

| | | | | | | | | |
|---|---|---|---|---|---|---|---|---|
| (1) : Densité relative SG= ρ_{échantillon} à 20°C /ρ_{H20} à 4°C ou ρ est la densité exprimée en g/cm³ (2) : Donnée non disponible. Présence d'une phase gazeuse à pression atmosphérique. | | | | | | | | |

Il est à noter que compte tenu de la configuration, les trois flux 9a, 9a2 et 9a3 présentent les mêmes propriétés et compositions.

**Tableau 6 : Conditions opératoires des colonnes**

| **Conditions opératoires de la colonne de séparation 20** | | **Figure 2** |
|---|---|---|
| Pression haut de colonne | MPa | 0,25 |
| Pression bas de colonne | MPa | 0,27 |
| Température Charge | °C | 347 |
| Nombre de plateaux théoriques | | 20 |
| Débit de vapeur d'eau strippant | kg/t ⁽¹⁾ | 27 |

| **Conditions opératoires du fractionnement 32** | | |
|---|---|---|
| Pression haut de colonne | MPa | 0,19 |
| Pression bas de colonne | MPa | 0,24 |
| Température Charge | °C | 370 |
| Nombre de plateaux théoriques | | 50 |
| Débit de vapeur d'eau strippant | kg/t ⁽¹⁾ | 106 |

| | | |
|---|---|---|
| (1) : kg de vapeur d'eau/tonne de fond | | |

Au démarrage des unités les valeurs des flux 9a des unités selon les configurations 1 et 2 sont identiques (13 ppm poids, voir tableau 1 et 3). Les valeurs données dans les tableaux 2 et 5 correspondent à la composition des différents flux en cours de « run », c'est-à-dire de l'unité en cours d'opération. Alors que en cours de run, la composition des flux 9a des deux configurations en cours d'accumulation évoluent très distinctement. En effet, les composition des flux 9a sont de 2053 ppm poids pour la configuration 1 et de 1489 ppm poids selon la configuration 2 ce qui illustrent l'accumulation plus grande des HPNA dans la configuration 1 due à la purge non optimale des HPNA dans la boucle de recycle et de l'absence de la colonne de séparation (20) en amont de la section de fractionnement (32) conformément à l'invention. Ainsi dans le procédé selon l'invention, au cours du temps, on constate bien une réduction significative de la quantité de HPNA se retrouvant dans le procédé et donc dans la section réactionnelle (2).

De plus, par rapport à la configuration de la figure 1 de l'art antérieur, la configuration 2 de l'invention permet de minimiser la quantité d'HPNA envoyée vers la section de fractionnement 32 et donc la quantité de HPNA qui repart à la section réactionnelle via la conduite 18. De ce fait, l'accumulation de HPNA dans la boucle de recyclage est réduite en tout point de cette boucle :
- Flux 9a : 1489 ppm pds dans la configuration 2 de l'invention à comparer à 2053 ppm pds dans la configuration 1 de l'art antérieur, soit une réduction de 27,5%
- Flux 18 : 1105 ppm pds dans la configuration 2 de l'invention à comparer à 1526 ppm pds dans la configuration 1 de l'art antérieur, soit une réduction de 27,6%

Enfin, la réduction de l'accumulation de HPNA dans la boucle de recyclage permet de limiter la désactivation due aux HPNA des catalyseurs mis en oeuvre dans le procédé et donc d'augmenter leur durée de cycle et leur durée de vie. En considérant une durée de cycle des catalyseurs pour la configuration 1 de l'art antérieur de 100, la réduction de l'accumulation des HPNA dans la boucle de recyclage permet d'améliorer la durée de cycle des catalyseurs mis en oeuvre dans le procédé selon l'invention à une valeur comprise entre 110 et 130 dans la configuration 2 de l'invention.

## Revendications

1. Procédé d'hydrocraquage d'une charge comprenant de 20 à 100% volume de composés ayant une température d'ébullition supérieure à 340°C, de préférence supérieure à 370°C, une teneur en soufre comprise entre 0.01 et 5% poids, une teneur en Azote supérieure à 500 ppm poids, de préférence comprise entre 500 et 1000 ppm poids, une teneur cumulée en Nickel et Vanadium inférieure à 2 ppm poids et une teneur en asphaltènes inférieure à 3000 ppm poids, de préférence inférieure à 1000 ppm poids, ledit procédé comprenant :
a) Une étape d'hydrocraquage a) de ladite charge, à une température supérieure à 200°C, une pression supérieure à 1 MPa, une vitesse spatiale comprise entre 0,1 e 20 h⁻¹ et un rapport volumique litre d'hydrogène / litre de charge compris entre 80 et 5000, et il est obtenu un effluent hydrocraqué,
b) une étape b) de séparation de l'effluent obtenu à l'issue de l'étape a) d'hydrocraquage mise en oeuvre dans une zone chaude de séparation comportant séparateur chaud à haute pression , ladite pression étant supérieure à 0,5 MPa et inférieure à la pression mise en oeuvre à l'étape a) d'hydrocraquage, et la température étant comprise entre 200°C et 450 °C, et il est obtenu un effluent gazeux en tête du séparateur chaud à haute pression et un effluent lourd en fond du séparateur chaud à haute pression,
c) une étape c) de séparation de l'effluent gazeux obtenu à l'issue de l'étape b) en tête du séparateur chaud à haute pression mise en oeuvre dans une zone de séparation froide comprenant un séparateur froid à haute pression à une température comprise entre 0 et 200°C,et une pression supérieure à 0,5 MPa et inférieure à la pression mis en oeuvre à l'étape b), et il est obtenu un effluent gazeux en tête du séparateur froid à haute pression et un effluent lourd en fond du séparateur froid à haute pression,
d) une étape d) de séparation de tout ou partie de l'effluent lourd obtenu à l'étape b), mise en oeuvre dans une colonne de séparation choisie parmi un stripeur ou une colonne rebouillie, opérant préférentiellement entre 0,001 MPa et 2,0 MPa, de préférence entre 0,01 et 1,0 MPa et très préférentiellement entre 0,1 et 0,5 MPa, il est obtenu un effluent gazeux en tête de ladite colonne et un résidu en fond de colonne, et au moins une partie dudit résidu, concentré en HPNA, ou la totalité, est purgée,
e) une étape e) de fractionnement de l'effluent lourd obtenu à l'issue de l'étape c), et de l'effluent gazeux obtenu à l'étape d), ladite étape étant mise en oeuvre dans une section de fractionnement, et il est obtenu au moins une fraction naphta, au moins une fraction gazole, un résidu et ledit résidu est recyclé en partie ou en totalité vers l'étape a) d'hydrocraquage.

2. Procédé selon la revendication 1 dans lequel la charge est traitée préalablement à l'étape a) par hydroraffinage et/ou, l'étape a) d'hydrocraquage est opéré en deux étapes avec séparation intermédiaire ou en une étape.

3. Procédé selon les revendications 1 ou 2 comprenant une étape b') de séparation mis en oeuvre dans la zone de séparation chaude dans laquelle l'effluent lourd issu de l'étape b) de séparation est traité dans un séparateur chaud à moyenne pression à une pression inférieure à 4,5MPa et à une température comprise entre 200 et 450°C et il est obtenu un effluent gazeux et un effluent lourd, ledit effluent lourd est envoyé à l'étape d).

4. Procédé selon les revendications 1 à 3 dans lequel l'étape c) de séparation est réalisée dans un séparateur choisi parmi un ballon de flash, un stripeur, ou une simple colonne à distiller, et à une pression inférieure à la pression de l'étape b) de 0,1 MPa à 1,0 MPa.

5. Procédé selon les revendications 1 à 4 comprenant une étape c') de séparation mis en oeuvre dans la zone de séparation froide de l'effluent lourd issu de l'étape c) et/ou de l'effluent gazeux obtenu à l'issue de l'étape b'), à une pression inférieur à 4,5 MPa et à une température comprise entre 0 et 200°C, et il est obtenu un effluent gazeux et un effluent lourd qui est envoyé à l'étape e).

6. Procédé selon les revendications 1 à 5 dans lequel l'étape d) de séparation est mise en oeuvre par stripage au moyen d'un gaz choisi parmi l'hydrogène et la vapeur d'eau à une pression comprise entre 0,1MPa et 2,0 MPa.

7. Procédé selon les revendications 1 à 6 comprenant une étape d') de séparation d'au moins un effluent issu de l'étape d) de séparation ou issu de l'étape c'), mis en oeuvre par stripage au moyen d'un gaz choisi parmi l'hydrogène et la vapeur d'eau, à pression comprise entre 0,2 MPa et 2,5MPa.

8. Procédé selon les revendications 1 à 7 dans lequel la section de fractionnement mis en oeuvre à l'étape e) comporte une ou plusieurs colonnes de distillation dans lesquels la pression est comprise entre 0,01 MPa et 0,5 MPa.

9. Procédé selon les revendications 1 à 8 dans lequel tout ou partie de l'effluent lourd issu de de l'étape b) ou de l'étape b') est envoyée vers la colonne de séparation mis en oeuvre à l'étape d), de préférence entre 0,1 et 100 % poids par rapport au flux total issu de l'étape b) ou b') (9a), de préférence entre 0,1 et 50 % poids, et de préférence entre 0,1 et 10% poids.

10. Procédé selon les revendications 1 à 9 dans lequel les effluents entrant dans la section de fractionnement (32) sont chauffés à une température comprise entre 200 et 450°C.

11. Dispositif comprenant :
• une section réactionnelle (2) d'hydrocraquage, munie d'une conduite (1) d'introduction de la charge, d'une conduite (8) d'introduction d'hydrogène entrant dans la section réactionnelle (2), ladite section étant munie d'une conduite (3a) pour le soutirage de l'effluent hydrocraqué,
• une première zone de séparation chaude comportant un séparateur chaud à haute pression (4a), muni d'une conduite (3a) d'introduction de l'effluent hydrocraqué , et muni en tête du séparateur d'une conduite (3b) d'évacuation d'un effluent gazeux et ladite zone étant munie d'une conduite (9a) de soutirage d'un effluent lourd,
• une deuxième zone de séparation froide comportant un séparateur froid à haute pression (4b), muni d'une conduite (3b) d'introduction de l'effluent gazeux issu du séparateur chaud à haute pression (4a), d'une conduite (5) d'évacuation d'un effluent gazeux et ladite zone étant munie d'une conduite (9b) de soutirage d'un effluent lourd,
• une zone (7) de compression d'une partie au moins de l'effluent gazeux issu séparateur froid à haute pression (4b), une conduite (6) d'introduction d'hydrogène dans la section d'hydrocraquage (2), une conduite (8) d'introduction du flux gazeux compressé dans la section d'hydrocraquage (2),
• une colonne de séparation (20) choisie parmi un stripeur ou une colonne rebouillie munie d'une conduite (9a3) d'introduction de tout ou partie de l'effluent lourd (9a) issu du séparateur haute température haute pression (4a), munie d'une conduite de soutirage située en fond de colonne d'un résidu contenant des HPNA, ledit résidu, concentré en HPNA, étant en partie ou en totalité purgé par une conduite de purge (16),et ladite colonne étant munie à sa tête d'une conduite (22) d'évacuation d'un effluent gazeux
• une section de fractionnement comportant une colonne de fractionnement (32), munie d'une conduite (22) d'introduction de l'effluent gazeux issu de ladite colonne de séparation, d'une conduite (9b) d'introduction de l'effluent lourd issu du séparateur froid à haute pression ((4b), d'une conduite (34) pour l'évacuation de la fraction naphta, d'une conduite (36) pour l'évacuation de la fraction gazole et d'une conduite (18) en fond de colonne pour le soutirage d'un résidu, ladite conduite (18) permettant le recyclage de tout ou partie dudit résidu de la section de fractionnement (32) à la section réactionnelle (2).

12. Dispositif selon la revendication 11 dans lequel la première zone chaude de séparation comporte en outre un séparateur chaud moyenne pression (4c), muni d'une conduite (9a1) d'introduction de l'effluent lourd issu du séparateur chaud haute pression (4a), muni d'une conduite (9a) de soutirage d'un effluent lourd et d'une conduite (11a) de l'effluent gazeux.

13. Dispositif selon les revendications 11 ou 12 lequel la seconde zone froide de séparation comporte en outre un séparateur froid moyenne pression (4d), muni d'une conduite (9b1) d'introduction de l'effluent lourd issu du séparateur froid haute pression (4b), muni d'une conduite (9b) de soutirage d'un effluent lourd et d'une conduite (11b) de l'effluent gazeux.

14. Dispositif selon les revendications 11 à 13 dans lequel la section de fractionnement comporte en outre une colonne de séparation (12) muni d'au moins une conduite (9b) d'introduction de l'effluent lourd issu d'un séparateur de zone froide de séparation, munie d'une conduite de (19) d'évacuation de l'effluent gazeux et d'une conduite (14) de soutirage de l'effluent lourd.

15. Dispositif selon les revendications 11 à 14 dans lequel la colonne de séparation (20) est un stripeur et le gaz de stripage est un gaz choisi parmi l'hydrogène et la vapeur d'eau à une pression comprise entre 0,1MPa et 2,0 MPa.

16. Dispositif selon les revendications 11 à 15 dans lequel la colonne de séparation (20) est munie d'une conduite (9a3) d'introduction de tout ou partie de l'effluent lourd (9a) issu du séparateur haute température haute pression (4a) ou issu du séparateur chaud moyenne pression (4c), de préférence entre 0,1 et 100 % poids par rapport au flux total (9a), de préférence entre 0,1 et 50 % poids, et de préférence entre 0,1 et 10% poids.

## Patentansprüche

1. Hydrocracking-Verfahren einer Charge, umfassend von 20 bis 100 Vol.-% Verbindungen mit einer Siedetemperatur von mehr als 340°C, vorzugsweise mehr als 370°C, einem Schwefelgehalt zwischen 0,01 und 5 Gew.-%, einem Stickstoffgehalt von mehr als 500 Gew.-ppm, vorzugsweise zwischen 500 und 1000 Gew.ppm, einem kumulierten Nickel- und Vanadiumgehalt von weniger als 2 Gew.-ppm und einem Gehalt an Asphaltenen von weniger als 3000 Gew.-ppm, vorzugsweise weniger als 1000 Gew.-ppm, wobei das Verfahren umfasst:
a) einen Hydrocracking-Schritt a) der Charge, bei einer Temperatur von mehr als 200°C, einem Druck von mehr als 1 MPa, einer Raumgeschwindigkeit zwischen 0,1 und 20 h⁻¹ und einem Volumenverhältnis von Liter Wasserstoff / Liter Charge zwischen 80 und 5000, und ein hydrogecrackter Abstrom wird erhalten,
b) einen Schritt b) der Trennung des am Ende des Hydrocracking-Schritts a) erhaltenen Abstroms, der in einer heißen Trennzone durchgeführt wird, umfassend einen heiße Trennvorrichtung mit hohem Druck, wobei der Druck größer ist als 0,5 MPa und kleiner ist als der Druck, der im Hydrocracking-Schritt a) verwendet wird, und wobei die Temperatur zwischen 200°C und 450°C beträgt, und ein gasförmiger Abstrom wird am Kopf der heißen Trennvorrichtung mit hohem Druck und ein schwerer Abstrom wird am Boden der heißen Trennvorrichtung mit hohem Druck erhalten,
c) einen Schritt c) der Trennung des am Ende von Schritt b) am Kopf der heißen Trennvorrichtung mit hohem Druck erhaltenen gasförmigen Abstroms, der in einer kalten Trennzone durchgeführt wird, umfassend eine kalte Trennvorrichtung mit hohem Druck bei einer Temperatur zwischen 0 und 200°C, und bei einem Druck von mehr als 0,5 MPa und kleiner als der Druck, der im Schritt b) verwendet wird, und es werden ein gasförmiger Abstrom am Kopf der kalten Trennvorrichtung mit hohem Druck und ein schwerer Abstrom am Boden der kalten Trennvorrichtung mit hohem Druck erhalten,
d) einen Schritt d) der Trennung des gesamten oder eines Teils des im Schritt b) erhaltenen schweren Abstroms, der durchgeführt wird in einer Trennsäule, ausgewählt aus einem Abzieher oder einer aufgekochten Säule, die vorzugsweise zwischen 0,001 MPa und 2,0 MPa betrieben werden, vorzugsweise zwischen 0,01 und 1,0 MPa, und stark bevorzugt zwischen 0,1 und 0,5 MPa, ein gasförmiger Abstrom wird am Kopf der Säule und ein Rückstand wird am Boden der Säule erhalten, und mindestens ein Teil des Rückstands, konzentriert mit HPNA, oder die Gesamtheit wird ausgespült,
e) einen Schritt e) der Fraktionierung des schweren Abstroms, der am Ende von Schritt c) erhalten wird, und des gasförmigen Abstroms, der im Schritt d) erhalten wird, wobei der Schritt in einem Fraktionierungsabschnitt durchgeführt wird, und es werden mindestens eine Naphtha-Fraktion, mindestens eine Heizöl-Fraktion, ein Rückstand erhalten, wobei der Rückstand teilweise oder vollständig zum Hydrocracking-Schritt a) rückgeführt wird.

2. Verfahren nach Anspruch 1, wobei die Charge vor dem Schritt a) durch Hydroraffinierung behandelt wird, und/oder der Hydrocracking-Schritt a) in zwei Schritten mit einer Zwischentrennung oder in einem Schritt durchgeführt wird.

3. Verfahren nach den Ansprüchen 1 oder 2, umfassend einen Trennschritt b'), der in der heißen Trennzone durchgeführt wird, wobei der schwere Abstrom aus dem Trennschritt b) in einer heißen Trennvorrichtung mit mittlerem Druck bei einem Druck von weniger als 4,5 MPa und bei einer Temperatur zwischen 200 und 450°C behandelt wird, und es werden ein gasförmiger Abstrom und ein schwerer Abstrom erhalten, wobei der schwere Abstrom zum Schritt d) geschickt wird.

4. Verfahren nach den Ansprüchen 1 bis 3, wobei der Trennschritt c) durchgeführt wird in einer Trennvorrichtung, ausgewählt aus einem Flashing-Gefäß, einem Abzieher oder einer einfachen Destillationssäule, und bei einem Druck, der kleiner ist als der Druck von Schritt b), von 0,1 MPa bis 1,0 MPa.

5. Verfahren nach den Ansprüchen 1 bis 4, umfassend einen Trennschritt c'), welcher durchgeführt wird in der kalten Trennzone des schweren Abstroms aus Schritt c) und/oder des gasförmigen Abstroms, der am Ende des Schritts b') erhalten wird, bei einem Druck von weniger als 4,5 MPa und bei einer Temperatur zwischen 0 und 200°C, und es werden ein gasförmiger Abstrom und ein schwerer Abstrom erhalten, der zum Schritt e) geschickt wird.

6. Verfahren nach den Ansprüchen 1 bis 5, wobei der Trennschritt d) durchgeführt wird durch Abziehen mittels eines Gases, ausgewählt aus Wasserstoff und Wasserdampf, bei einem Druck zwischen 0,1 MPa und 2,0 MPa.

7. Verfahren nach den Ansprüchen 1 bis 6, umfassend einen Trennschritt d') mindestens eines Abstroms aus dem Trennschritt d) oder aus dem Schritt c'), der durchgeführt wird durch Abziehen mittels eines Gases, ausgewählt aus Wasserstoff und Wasserdampf, bei einem Druck zwischen 0,2 MPa und 2,5 MPa.

8. Verfahren nach den Ansprüchen 1 bis 7, wobei der Fraktionierungsabschnitt, der im Schritt e) verwendet wird, eine oder mehrere Destillationssäulen umfasst, in denen der Druck zwischen 0,01 MPa und 0,5 MPa liegt.

9. Verfahren nach den Ansprüchen 1 bis 8, wobei der gesamte oder ein Teil des schweren Abstroms aus dem Schritt b) oder aus dem Schritt b') zur Trennsäule geschickt wird, die im Schritt d) verwendet wird, vorzugsweise zwischen 0,1 und 100 Gew.-% im Verhältnis zum gesamten Strom aus dem Schritt b) oder b') (9a), vorzugsweise zwischen 0,1 und 50 Gew.-%, und vorzugsweise zwischen 0,1 und 10 Gew.-%.

10. Verfahren nach den Ansprüchen 1 bis 9, wobei die Abströme, die in den Fraktionierungsabschnitt (32) eintreten, auf eine Temperatur zwischen 200 und 450°C erhitzt werden.

11. Vorrichtung, umfassend:
- einen Hydrocracking-Reaktionsabschnitt (2), welcher mit einer Leitung (1) zum Einführen der Charge und mit einer Leitung (8) zum Einführen von Wasserstoff ausgestattet ist, der in den Reaktionsabschnitt (2) eintritt, wobei der Abschnitt mit einer Leitung (3a) zum Abziehen des hydrogecrackten Abstroms versehen ist,
- eine erste heiße Trennzone, umfassend eine heiße Trennvorrichtung mit hohem Druck (4a), die mit einer Leitung (3a) zum Einführen des hydrogecrackten Abstroms versehen ist, und am Kopf der Trennvorrichtung mit einer Leitung (3b) zum Abführen eines gasförmigen Abstroms versehen ist, und wobei die Zone mit einer Leitung (9a) zum Abziehen eines schweren Abstroms versehen ist,
- eine zweite kalte Trennzone, umfassend eine kalte Trennvorrichtung mit hohem Druck (4b), die mit einer Leitung (3b) zum Einführen des gasförmigen Abstroms aus der heißen Trennvorrichtung mit hohem Druck (4a) und mit einer Leitung (5) zum Abführen eines gasförmigen Abstroms versehen ist, und wobei die Zone mit einer Leitung (9b) zum Abziehen eines schweren Abstroms versehen ist,
- eine Zone (7) zum Komprimieren mindestens eines Teils des gasförmigen Abstroms aus der kalten Trennvorrichtung mit hohem Druck (4b), eine Leitung (6) zum Einführen von Wasserstoff in den Hydrocracking-Abschnitt (2), eine Leitung (8) zum Einführen des komprimierten gasförmigen Stroms in den Hydrocracking-Abschnitt (2),
- eine Trennsäule (20), ausgewählt aus einem Abzieher oder einer aufgekochten Säule, die mit einer Leitung (9a3) zum Einführen des gesamten oder eines Teils des schweren Abstroms (9a) aus der Trennvorrichtung mit hoher Temperatur mit hohem Druck (4a) versehen ist, und die mit einer am Boden der Säule angeordneten Leitung zum Abziehen eines Rückstands, der HPNA enthält, versehen ist, wobei der Rückstand, konzentriert mit HPNA, teilweise oder zur Gänze durch eine Ausspülleitung (16) ausgespült wird, und wobei die Säule an ihrem Kopf mit einer Leitung (22) zum Abführen eines gasförmigen Abstroms versehen ist,
- einen Fraktionierungsabschnitt, umfassend eine Fraktionierungssäule (32), die mit einer Leitung (22) zum Einführen des gasförmigen Abstroms aus der Trennsäule, mit einer Leitung (9b) zum Einführen des schweren Abstroms aus der kalten Trennvorrichtung mit hohem Druck (4b), einer Leitung (34) zum Abführen der Naphtha-Fraktion, einer Leitung (36) zum Abführen der Heizöl-Fraktion und einer Leitung (18) am Boden der Säule zum Abziehen eines Rückstands versehen ist, wobei die Leitung (18) das Rückführen des gesamten oder eines Teils des Rückstands des Fraktionierungsabschnitts (32) zum Reaktionsabschnitt (2) gestattet.

12. Vorrichtung nach Anspruch 11, wobei die erste heiße Trennzone außerdem eine heiße Trennvorrichtung mit mittlerem Druck (4c) umfasst, die mit einer Leitung (9a1) zum Einführen des schweren Abstroms aus der heißen Trennvorrichtung mit hohem Druck (4a) versehen ist, mit einer Leitung (9a) zum Abziehen eines schweren Abstroms und mit einer Leitung (11a) des gasförmigen Abstroms versehen ist.

13. Vorrichtung nach den Ansprüchen 11 oder 12, wobei die zweite kalte Trennzone außerdem eine kalte Trennvorrichtung mit mittlerem Druck (4d) umfasst, die mit einer Leitung (9b1) zum Einführen des schweren Abstroms aus der kalten Trennvorrichtung mit hohem Druck (4b) versehen ist, mit einer Leitung (9b) zum Abziehen eines schweren Abstroms und mit einer Leitung (11b) des gasförmigen Abstroms versehen ist.

14. Vorrichtung nach den Ansprüchen 11 bis 13, wobei der Fraktionierungsabschnitt außerdem eine Trennsäule (12) umfasst, die mit mindestens einer Leitung (9b) zum Einführen des schweren Abstroms aus einer Trennvorrichtung der kalten Trennzone versehen ist, mit einer Leitung (19) zum Abführen des gasförmigen Abstroms und mit einer Leitung (14) zum Abziehen des schweren Abstroms versehen ist.

15. Vorrichtung nach den Ansprüchen 11 bis 14, wobei die Trennsäule (20) ein Abzieher ist und das Abziehgas ein Gas ist, ausgewählt aus Wasserstoff und Wasserdampf, bei einem Druck zwischen 0,1 MPa und 2,0 MPa.

16. Vorrichtung nach den Ansprüchen 11 bis 15, wobei die Trennsäule (20) mit einer Leitung (9a3) zum Einführen des gesamten oder eines Teils des schweren Abstroms (9a) aus der Trennvorrichtung mit hoher Temperatur mit hohem Druck (4a) oder aus der heißen Trennvorrichtung mit mittleren Druck (4c) versehen ist, vorzugsweise zwischen 0,1 und 100 Gew.-% im Verhältnis zum gesamten Strom (9a), vorzugsweise zwischen 0,1 und 50 Gew.-%, und vorzugsweise zwischen 0,1 und 10 Gew.-%.

## Claims

1. A process for hydrocracking a feed comprising 20% to 100% by volume of compounds, having a boiling temperature of more than 340°C, preferably more than 370°C, a sulphur content in the range 0.01% to 5% by weight, a nitrogen content of more than 500 ppm by weight, preferably in the range 500 to 1000 ppm by weight, a cumulative nickel and vanadium content of less than 2 ppm by weight and an asphaltenes content of less than 3000 ppm by weight, preferably less than 1000 ppm by weight, said process comprising:
a) a step a) for hydrocracking said feed, at a temperature of more than 200°C, a pressure of more than 1 MPa, a space velocity in the range 0.1 to 20 h⁻¹ and a volume ratio, in litre of hydrogen/litre of feed, in the range 80 to 5000, and a hydrocracked effluent is obtained,
b) a step b) for separating the effluent obtained from the hydrocracking step a) carried out in a hot separation zone comprising a high pressure hot separator, said pressure being more than 0.5 MPa and less than the pressure employed in the hydrocracking step a), and the temperature being in the range 200°C to 450°C, and a gaseous effluent is obtained from the head of the high pressure hot separator and a heavy effluent is obtained from the bottom of the high pressure hot separator,
c) a step c) for separating the gaseous effluent obtained from step b) at the head of the high pressure hot separator carried out in a cold separation zone comprising a high pressure cold separator at a temperature in the range 0°C to 200°C, and at a pressure of more than 0.5 MPa and less than the pressure employed in step b), and a gaseous effluent is obtained from the head of the high pressure cold separator and a heavy effluent is obtained from the bottom of the high pressure cold separator,
d) a step d) for separation of all or part of the heavy effluent obtained from step b), carried out in a separation column selected from a stripper or a reboiler column, operating between 0,001 MPa and 2,. MPa, préférentialy between 0,01 and 1,0 MPa and more preferentialy between 0,1 and 0,5 MPA, and a gaseous effluent is obtained from the head of said column and a residue from the bottom of the column, and at least a portion of said residue or all if it, concentrated in HPNA, is purged,
e) a step e) for fractionation of the heavy effluent obtained from step c) and of the gaseous effluent obtained in step d), said step being carried out in a fractionation section, and at least one naphtha fraction, at least one gas oil fraction, and a residue are obtained and said residue is recycled, in part or in its entirety, to the hydrocracking step a).

2. The process as claimed in claim 1, in which the feed is treated by hydrorefining prior to step a) and/or hydrocracking step a) is operated in two steps with an intermediate separation or in a single step.

3. The process as claimed in claim 1 or claim 2, comprising a step b') for separation carried out in the hot separation zone, in which the heavy effluent obtained from the separation step b) is treated in a medium pressure hot separator at a pressure below 4.5 MPa and at a temperature in the range 200°C to 450°C, and a gaseous effluent and a heavy effluent are obtained, said heavy effluent being sent to step d).

4. The process as claimed in claims 1 to 3, in which the separation step c) is carried out in a separator selected from a flash drum, a stripper or a simple distillation column, and at a pressure which is lower than the pressure of step b) by 0.1 MPa to 1.0 MPa.

5. The process as claimed in claims 1 to 4, comprising a step c') for separation, carried out in the cold separation zone, of the heavy effluent obtained from step c) and/or the gaseous effluent obtained from step b'), at a pressure of less than 4.5 MPa and at a temperature in the range 0°C to 200°C, and a gaseous effluent and a heavy effluent are obtained which are sent to step e).

6. The process as claimed in claims 1 to 5, in which the separation step d) is carried out by stripping using a gas selected from hydrogen and steam at a pressure in the range 0.1 MPa to 2.0 MPa.

7. The process as claimed in claims 1 to 6, comprising a step d') for the separation of at least one effluent obtained from the separation step d) or obtained from step c'), carried out by stripping by means of a gas selected from hydrogen and steam, at a pressure in the range 0.2 MPa to 2.5 MPa.

8. The process as claimed in claims 1 to 7, in which the fractionation section employed in step e) comprises one or more distillation columns in which the pressure is in the range 0.01 MPa to 0.5 MPa.

9. The process as claimed in claims 1 to 8, in which all or a portion of the heavy effluent obtained from step b) or from step b') is sent to the separation column used in step d), preferably in the range 0.1% to 100% by weight with respect to the total stream obtained from step b) or b') (9a), preferably in the range 0.1% to 50% by weight, preferably in the range 0.1% to 10% by weight.

10. The process as claimed in claims 1 to 9, in which the effluents entering the fractionation section (32) are heated to a temperature in the range 200°C to 450°C.

11. A device comprising:
• a hydrocracking reaction section (2) provided with a conduit (1) for introducing feed, and a conduit (8) for introducing hydrogen entering the reaction section (2), said section being provided with a conduit (3a) for withdrawing hydrocracked effluent,
• a first hot separation zone comprising a high pressure hot separator (4a) provided with a conduit (3a) for introducing hydrocracked effluent and provided at the head of the separator with a conduit (3b) for evacuating a gaseous effluent and said zone being provided with a conduit (9a) for withdrawing a heavy effluent,
• a second cold separation zone comprising a high pressure cold separator (4b) provided with a conduit (3b) for introducing gaseous effluent obtained from the high pressure hot separator (4a), a conduit (5) for evacuation of a gaseous effluent, and said zone being provided with a conduit (9b) for withdrawing a heavy effluent,
• a zone (7) for compressing at least a portion of the gaseous effluent obtained from the high pressure cold separator (4b), a conduit (6) for introducing hydrogen into the hydrocracking section (2), and a conduit (8) for introducing a compressed gaseous stream into the hydrocracking section (2),
• a separation column (20) chosen between a stripper or a reboiled column, provided with a conduit (9a3) for introducing all or a portion of the heavy effluent (9a) obtained from the high pressure high temperature separator (4a), provided with a conduit located at the bottom of the column for withdrawing a residue containing HPNAs, said residue, concentrated in HPNA, being purged from the process, in part or in its entirety, via a purge conduit (16), and said column being provided at its head with a conduit (22) for evacuating a gaseous effluent,
• a fractionation section comprising a fractionation column (32) provided with a conduit (22) for introducing gaseous effluent obtained from said separation column, a conduit (9b) for introducing heavy effluent obtained from the high pressure cold separator (4b), a conduit (34) for the evacuation of the naphtha fraction, a conduit (36) for the evacuation of a gas oil fraction and a conduit (18) at the column bottom for withdrawing a residue, said conduit (18) allowing all or a portion of said residue to be recycled from the fractionation section (32) to the reaction section (2).

12. The device as claimed in claim 11, in which the first hot separation zone furthermore comprises a medium pressure hot separator (4c) provided with a conduit (9al) for introducing heavy effluent obtained from the high pressure hot separator (4a), provided with a conduit (9a) for withdrawing a heavy effluent and a conduit (11a) for gaseous effluent.

13. The device as claimed in claim 11 or claim 12, in which the second cold separation zone furthermore comprises a medium pressure cold separator (4d) provided with a conduit (9b1) for introducing heavy effluent obtained from the high pressure cold separator (4b), provided with a conduit (9b) for withdrawing a heavy effluent and a conduit (11b) for gaseous effluent.

14. The device as claimed in claims 11 to 13, in which the fractionation section furthermore comprises a separation column (12) provided with at least one conduit (9b) for introducing heavy effluent obtained from a separator of the cold separation zone, provided with a conduit (19) for the evacuation of gaseous effluent and a conduit (14) for withdrawing heavy effluent.

15. The device as claimed in claims 11 to 14, in which the separation column (20) is a stripper and the stripping gas is selected among hydrogen and steam at a pressure ranging from 0,1 MPA to 2,0 MPA.

16. The device as claimed in claims 11 to 15, in which the separation column (20) is provided with a conduit (9a3) for introducing all or a portion of the heavy effluent (9a) obtained from the high pressure high temperature separator (4a) or obtained from the medium pressure hot separator (4c), preferentially between 0,1 to 100% by weight with respect to the total stream (9a), preferentially between 0,1 to 50 % by weight and more preferentially between 0,1 to 10% by weight.
